# EUROPEAN PATENT APPLICATION

(11) **EP 4 703 770 A1**
(43) Date of publication of application: **04.03.2026**
(21) Application number: 24197373.4
(22) Date of filing: 29.08.2024
(51) Int. Cl.: G01S 17/04, G01S 17/08, G01S 17/894

(54) **METHOD AND DEVICE FOR WAKENING UP A TERMINAL UPON PROXIMITY DETECTION**

(71) Applicant: Ingenico Belgium, 1130 Bruxelles (BE)
(72) Inventor: Vanderlinden, Jade, 3400 Ezemaal (BE)
(74) Representative: Germain Maureau

(57) **Abstract**

The present disclosure relates to a method for detecting a user (U1) approaching a terminal (T1) within a detection distance (D), the method comprising: feeding a LED, by electrical pulses, between an RC circuit connected to a voltage source and a first resistor connected to ground, the LED illuminating a detection zone with light pulses; capturing by a photodiode light pulses coming from the detection zone; determining a pulse count representative of a time-of-flight of a light pulse emitted by the LED and received by the photodiode; computing a count variation by subtracting a reference count from the pulse count, the reference count being determined when no object is present in the detection zone; comparing the count variation with a threshold corresponding to the detection distance; and triggering an operation when the count variation is lower than the first threshold.

## Description

### TECHNICAL FIELD

The present invention relates to the field of terminals and more particularly to terminals installed in public areas, such as payment terminals or Point-of-Sale (POS). POS terminals allow users, such as merchants to offer customers flexibility in conducting goods or services sales transactions.

### BACKGROUND

At present, for energy saving purposes, many terminals present a sleep mode in which functions of the terminal are stopped to reduce the energy consumption of the terminal, and an active mode in which the terminal is fully operational. To this effect, the terminal comprises sensors such as a proximity detection circuit to provide a proximity detection signal that can be used to activate the sleep or active mode depending on the presence or absence of a user near the terminal. Generally, the proximity detection circuit comprises an infrared (IR) source, such as a light-emitting diode (LED) and a photodiode sensitive to the radiations emitted by the IR LED.

To let enough time to the terminal to wake up to the active mode (to wake up all processes of the terminal in sleep mode) before the user reaches the terminal, the detection distance has to be adjusted to a few tens of centimeters, in the case of a payment terminal. However, to reach such a distance, high currents need to be drawn in a short time. For example, a detection distance of 1 m requires feeding the LED with a current of more than 4 A in good environmental conditions. Generally the target terminals use a power management integrated circuit (PMIC) that can supply only 3 A in the best cases.

In addition, important variations of the detection distance can be observed. It has been found that these variations can result from a lot of different parameters, such as environmental conditions, mechanical tolerances in assembly, variations in electronics components (even in a same batch), thickness of the window glass in front of the photodiode. In addition, when the user wears dark clothes the detection distance is reduced.

Therefore, there is a need for detecting a user approaching a terminal within a detection distance that can be adjusted to more than 40 cm. It is further desirable that the detection distance is constant and independent from environmental conditions, mechanical tolerances in assembly and variations in electronics components. It can be further desirable to avoid high currents for feeding the LED that can damage the power circuit of the terminal.

### SUMMARY

The present disclosure is related to a method for detecting a user approaching a terminal within a detection distance, the method comprising: feeding a light emitting diode, LED, by electrical pulses, between an RC circuit connected to a voltage source and a first resistor connected to a ground terminal, the LED illuminating a detection zone with light pulses corresponding to the electrical pulses, the light pulses being in a wavelength bandwidth; capturing by a photodiode light pulses coming from the detection zone and having a wavelength located in the wavelength bandwidth; determining by a processing circuit a pulse count representative of a time-of-flight between a time of emission of a light pulse by the LED and a time of reception by the photodiode of a corresponding reflected light pulse; computing by the processing circuit a count variation by subtracting a reference null count from the pulse count, the reference null count being determined when no object is present in the detection zone; comparing by the processing circuit the count variation with a first threshold corresponding to the detection distance; and triggering by the processing circuit a first operation when the count variation is lower than the first threshold.

In this manner, the detection distance is constant and independent from environmental conditions, mechanical tolerances in assembly and variations in electronics components.

According to an embodiment, the operation switches the terminal from a sleep mode in which some hardware and/or software components of the terminal are stopped, to an active mode in which the hardware and/or software components of the terminal are operational.

Thus, energy consumed by the terminal can be saved when the terminal is not used.

According to an embodiment, the RC circuit comprises a second resistor connected to the voltage source and a capacitor connected to the ground terminal, the second resistor having a resistance value between 5 and 15 Ω, the capacitor having a value between 0.4 mF and 1 mF, and the first resistor having a resistance value between 0.1 and 0.4 Ω, the voltage source being set to a voltage between 2.5 to 5.5 V.

Thanks to such a feeding circuit, the detection distance corresponding to the first threshold that can be set to more than 40 cm, and at the same time, the current drawn by the LED is compatible with a power circuit of the terminal. When the operation sets the terminal in a sleep mode, such a distance gives the terminal sufficient time to wake up before the user arrives close to the terminal to use it.

According to an embodiment, the method further comprises: comparing by the processing circuit the pulse count with a second threshold corresponding to an absence of object in the detection zone; and computing by the processing circuit the reference null count from the pulse count when the pulse count is greater than the second threshold.

In this manner, the reference null count can be adjusted as a function of environmental conditions, mechanical tolerances in assembly and variations in electronics components of the detection device comprising the LED and the photodiode.

According to an embodiment, the method further comprises: storing by the processing circuit the pulse count when the pulse count is greater than the second threshold, the pulse count being determined periodically; and computing by the processing circuit an average from previously stored pulse counts, the reference null count being computed from the average.

In this manner, the reference null count can be updated to take into account variations of the environmental conditions.

According to an embodiment, the method further comprises triggering by the processing circuit a second operation when the pulse count is greater than the second threshold.

Thus, the second operation can reverse the first operation.

According to an embodiment, the method further comprises determining the second threshold during manufacture of the terminal by acquiring a pulse count when no object is present in the detection zone.

In this manner, the second threshold can be adapted to mechanical tolerances in assembly and variations in electronics components of the terminal and more particularly to the proximity detection device.

According to an embodiment, the wavelength bandwidth of the light emitted by the LED and to which the photodiode is sensitive is set to 700-1000 nm.

Such a bandwidth enables the proximity detection to be insensitive to environmental lighting conditions.

Embodiments may also relate to a proximity detection device comprising: a light emitting diode, LED; a photodiode; a feeding circuit for feeding the LED, comprising an RC circuit connected to a voltage source and a first resistor connected to a ground terminal; and a processing circuit, the proximity detection device being configured to implement the method as above-defined.

According to an embodiment, the RC circuit comprises a second resistor connected to the voltage source and a capacitor connected to the ground terminal, the second resistor having a resistance value between 5 and 15 Ω, the capacitor having a value between 0.4 mF and 1 mF, and the first resistor having a resistance value between 0.1 and 0.4 Ω, the voltage source being set to a voltage between 2.5 to 5.5 V.

According to an embodiment, a wavelength bandwidth of the light emitted by the LED and to which the photodiode is sensitive is set to 700-1000 nm.

Embodiments may also relate to a terminal comprising a proximity detection device as above-defined

According to an embodiment, the terminal is of the type payment terminal.

### BRIEF DESCRIPTION OF THE DRAWINGS

The foregoing and other purposes, features, aspects and advantages of the invention will become apparent from the following detailed description of embodiments, given by way of illustration and not limitation, with reference to the accompanying drawings, in which the same reference refer to similar elements or to elements having similar functions, and in which:
Figure 1 is a block diagram showing components of a terminal, according to an embodiment;
Figure 2 is a block diagram of a proximity detection device of the terminal, according to an embodiment;
Figure 3 is a block diagram of a proximity detection sensor used in the proximity detection device, according to an embodiment;
Figure 4 is a flowchart showing steps of a method for determining a detection distance between an object and the proximity detection device;

### DETAILED DESCRIPTION

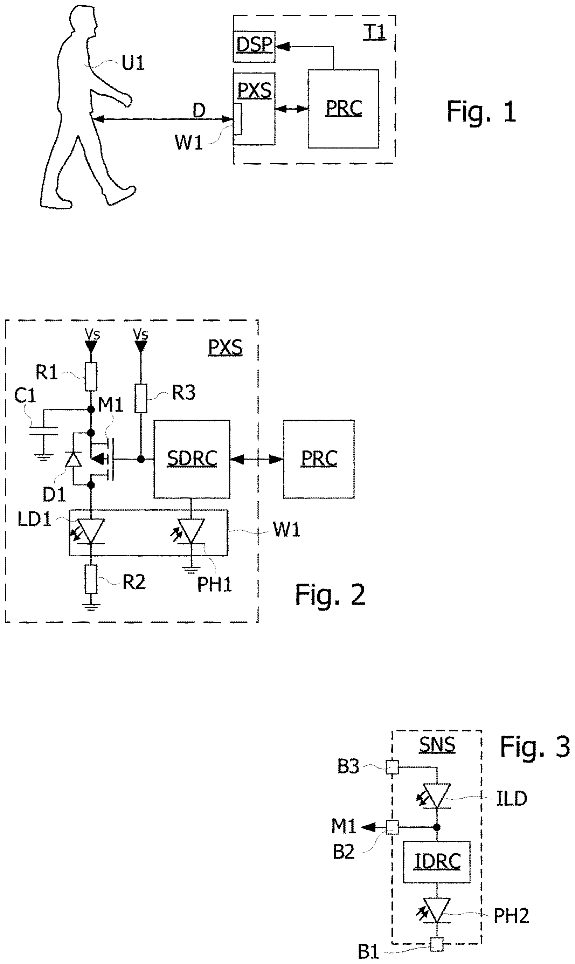

Figure 1 shows a terminal T1, according to an embodiment. The terminal comprises a processor PRC, a display screen DSP and a proximity detection device PXS for detecting a user U1 approaching the terminal T1. The terminal operates according to an active mode in which all hardware and software components of the terminal are fully operational, and a sleep mode in which some hardware and software components of the terminal are stopped to save power.

The proximity detection device PXS provides distance measurements that are transmitted to the processor PRC to be used to activate the active mode from the sleep mode when a user U1 is detected within a detection distance D from a window W1 of the device PXS, and to activate the sleep mode from the active mode when no user is detected within the detection distance D from the window W1.

Figure 2 shows the proximity detection device PXS, according to an embodiment. The proximity detection device PXS comprises a sensor driver circuit SDRC, an IR LED LD1, a photodiode PH1 sensitive to the light emitted by the LED LD1, resistors R1, R2, R3, a capacitor C1 and a transistor M1. The photodiode PH1 and LED LD1 are disposed behind the transparent window W1 to capture light and project light through the window W1, respectively. The transistor M1 can be a P-channel MOSFET (Metal-Oxide-Semiconductor Field-Effect Transistor) with a diode D1 linking a source terminal to a drain terminal of the transistor M1. The P-channel MOSFET used for the transistor M1 could have a low ground-source voltage (VGS), a low drain-source resistor Rds in an on state, and a low Input capacitance.

The photodiode PH1 is connected between an input of the sensor driver circuit SDRC and a ground of the terminal T1. A cathode terminal of the LED LD1 is linked to ground by the resistor R2. An anode terminal of the LED LD1 is linked to a drain terminal of the transistor M1. A gate terminal of the transistor M1 is connected to a control output of the sensor driver circuit SDRC, and linked to a voltage source Vs by the resistor R3. A source terminal of the transistor M1 is linked to the voltage source Vs by the resistor R1 and to the ground by the capacitor C1. The resistor R1 and the capacitor C1 form an RC circuit that reduces the current drawn by the LED LD1 from the voltage source Vs. For this purpose, the resistors R1 and R2 have small values.

The sensor driver circuit SDRC generates on its control output at the gate terminal of the transistor M1 a pulsed signal that is provided to the LED LD1. Thus the LED LD1 emits a pulsed light through the window W1. If an object reflects the pulsed light emitted by the LED LD1, the photodiode PH1 produces a signal which is transmitted to the circuit SDRC. The signal from the photodiode PH1 which has a level depending on intensity of light coming back from the object is processed by the driver circuit SDRC. The circuit SDRC can be connected to the processor PRC by a bus such as of the type I2C (Inter-Integrated Circuit) or SPI (Serial Peripheral Interface).

According to an embodiment, the circuit SDRC generates from the signal received from the photodiode PH1 a pulse count varying as a function of a time-of-flight between a time of emission of a light pulse by the LED LD1 and a time of reception by the photodiode PH1 of a corresponding reflected light pulse. However, it can be observed that the pulse count determined by the circuit SDRC varies as a function of mechanical tolerances in assembly, variations in electronics components, and environmental conditions. Therefore, there is no proportional relation between the pulse counts determined by the circuit SDRC and the detection distance D. When fixing a count threshold, the corresponding real detection distance can vary to several tens of centimeters.

According to an embodiment, the processor is configured to store as a reference null count, counts generated by the driver circuit SDRC when nobody is present in front of the photodiode PH1, i.e. counts corresponding to highest detection distances, and to subtract the reference null count from each measured count value subsequently acquired. This operation enables to substantially remove product variations. Influence of variations of environmental conditions can be compensated or attenuated when the reference null count is updated at a relatively high frequency, e.g. each minute or hour when the measured count value is lower than a low count threshold corresponding to an absence of detection (corresponding to highest detection distances). The low count threshold can be determined from a null count value that can be acquired during manufacture of the terminal T1, when nobody is in a detection zone in front of the windows W1. The reference null count can be an average value computed from several null counts acquired periodically when nobody is present in the detection zone.

According to an example, the voltage source is set to a voltage between 2.5 to 5.5 V, e.g. between 3 and 4 V. The resistor R1 has a resistance value between 5 and 15 Ω, for example 10 Ω. The resistor R2 has a resistance value between 0.1 and 0.4 Ω, for example 0.2 Ω. The resistor R3 can be set to a resistance value of 100 Ω. The capacitor C1 has a value between 0.4 mF and 1 mF, for example 0.9 mF. The wavelength bandwidth of the light emitted by the LED LD1 and to which the photodiode PH1 is sensitive can be set to 700-1000 nm, for example 800-900 nm.

According to an example shown by Figure 3, the circuit SDRC and the photodiode PH1 can be realized using an integrated circuit SNS such as vcnl4010x or vcnl4030x01 manufactured by VISHAY. The circuit SNS comprises an internal driver circuit IDRC, an internal photodiode PH2 connected between an input of the circuit IDRC and a terminal B1 of the circuit SNS, and an internal LED ILD. The LED ILD has a cathode terminal connected an output of the circuit IDRC and to a terminal B2 of the circuit SNS, and an anode terminal connected to a terminal B3 of the circuit SNS. In the circuit TXS, the terminal B1 is connected to the ground, the terminal B2 is connected to the gate terminal of the transistor M1 and to the resistor R3. The terminal B3 is not connected, the LED ILD being not used and replaced by the LED LD1 to reach a higher detection distance, the circuit SNS having a detection distance of a few centimeters.

The led LD1 can be implemented by the component VSY2850G, VSMY7850X01 or VSMY98545 manufactured by VISHAY.

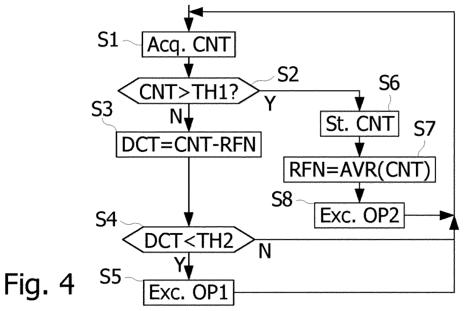

Figure 4 shows steps S1-S8 of a method executed by a processing circuit which can be the processor PRC, according to an embodiment. This method is configured to determine the detection distance D between an object U1 and the proximity detection device PXS. In step S1, the processing circuit acquires a pulse count CNT from the sensor driver circuit SDRC. In step S2, the pulse count CNT is compared to a first threshold TH1. The threshold TH1 can be the low count threshold determined from a null count value, for example acquired during manufacturing of the terminal T1, when nobody is in front of the windows W1 in a detection zone of the device PXS. If at step S2 the pulse count CNT is greater than the threshold TH1, this means that nobody is in front of the window W1. Then, the processing circuit carries out steps S6 and S7, otherwise it carries out steps S3 and S4.

In step S3, the processing circuit computes a count variation DCT by subtracting a reference null count RFN from the pulse count CNT. In step S4, the count variation DCT is compared to a second threshold TH2. If the count variation DCT is smaller than the second threshold TH2, the processing circuit carries out step S5, otherwise it continues the processing from step S1. In step S5, the processing circuit, triggers an operation OP1 such as wakening up some or all functions of the terminal T1.

In step S6, the pulse count CNT is stored in a memory of the terminal T1. In step S7, the reference null count RFN is updated by computing an average value of previous values of the pulse counts stored at step S6. The average value RFN computed at step S7 can be a moving average computed from the last n stored values of the pulse counts, n being an integer number. In step S8, the processing circuit triggers an operation OP2 such as setting some or all functions of the terminal T1 in the sleep mode if they are not already in this mode. After steps S5 and S8, the processing circuit continues the processing from step S1.

The above description of various embodiments is provided for purpose of description to one of ordinary skills in the related art. It is not intended to be exhaustive or to limit the scope of the present disclosure solely to the disclosed embodiments. Numerous alternatives or variations to the present disclosure will be apparent to those of ordinary skills in the related art. Accordingly, while some alternatives or embodiments have been presented specifically, other embodiments will be apparent or easily developed by those of ordinary skills in the related art. Limitations in the appended claims should be interpreted broadly based on the language used in the claims and such limitations should not be restricted to the specific examples described above.

In this respect, it is apparent to those of ordinary skills in the related art that the operation triggered when an object is detected in the detection zone or within the distance D can be any other operation than switching from an active mode to a sleep mode. For example, such an operation can be for example opening a door, turning on a light.

In addition, the components of Figure 2, and especially the resistors R1, R2 and C2 can have any other values suitable to reach a detection distance or more than 40 cm, and limiting the current in the LED LD1 to values compatible with the power circuit of the terminal.

The second threshold can be determined using other methods than those described above. For example, the second threshold can be set to a value that can never be reached when an object is in the detection zone regardless of the environmental conditions of the terminal in the place the latter is installed.

It can be not necessary to execute a second operation, especially when the first operation OP1 has a not permanent effect. In addition, the second operation OP2 is not necessarily triggered based on the second threshold TH2, but it can be triggered based on any other condition reflecting a detection distance greater than the detection distance D corresponding to the first threshold TH1.

The wavelength bandwidth of the LED LD1 and the photodiode PH1 are is necessarily one of those specified above, but can be have any other location between the UV band and the microwaves band.

The terminal T1 is not necessarily a payment terminal, but can be of any other terminal type, such as a personal computer.

## Claims

1. A method for detecting a user (U1) approaching a terminal (T1) within a detection distance (D), the method comprising:
feeding a light emitting diode, LED, (LD1) by electrical pulses, between an RC circuit (R1-C1) connected to a voltage source and a first resistor (R2) connected to a ground terminal, the LED illuminating a detection zone with light pulses corresponding to the electrical pulses, the light pulses being in a wavelength bandwidth;
capturing by a photodiode (PH1) light pulses coming from the detection zone and having a wavelength located in the wavelength bandwidth;
determining by a processing circuit (PRC) a pulse count (CNT) representative of a time-of-flight between a time of emission of a light pulse by the LED and a time of reception by the photodiode of a corresponding reflected light pulse;
computing by the processing circuit a count variation (DCT) by subtracting a reference null count (RFN) from the pulse count, the reference null count being determined when no object is present in the detection zone;
comparing by the processing circuit the count variation with a first threshold (TH2) corresponding to the detection distance (D); and
triggering by the processing circuit a first operation (OP1) when the count variation is lower than the first threshold.

2. The method of claim 1, wherein the operation switches the terminal (T1) from a sleep mode in which some hardware and/or software components of the terminal are stopped, to an active mode in which the hardware and/or software components of the terminal are operational.

3. The method of claim 1 or 2, wherein the RC circuit (R1-C1) comprises a second resistor (R1) connected to the voltage source and a capacitor (C1) connected to the ground terminal, the second resistor having a resistance value between 5 and 15 Ω, the capacitor having a value between 0.4 mF and 1 mF, and the first resistor (R2) having a resistance value between 0.1 and 0.4 Ω, the voltage source being set to a voltage between 2.5 to 5.5 V.

4. The method according to one of claims 1 to 3, further comprising:
comparing by the processing circuit (PRC) the pulse count (CNT) with a second threshold (TH1) corresponding to an absence of object in the detection zone; and
computing by the processing circuit the reference null count (RFN) from the pulse count when the pulse count is greater than the second threshold.

5. The method according to claim 4, further comprising:
storing by the processing circuit (PRC) the pulse count (CNT) when the pulse count is greater than the second threshold (TH1), the pulse count being determined periodically; and
computing by the processing circuit an average from previously stored pulse counts, the reference null count (RFN) being computed from the average.

6. The method according to one of claims 4 and 5, further comprising triggering by the processing circuit a second operation (OP2) when the pulse count (CNT) is greater than the second threshold (TH1).

7. The method according to one of claims 4 to 6, further comprising determining the second threshold (TH1) during manufacture of the terminal (T1) by acquiring a pulse count when no object is present in the detection zone.

8. The method according to one of claims 1 to 7, wherein the wavelength bandwidth of the light emitted by the LED (LD1) and to which the photodiode (PH1) is sensitive is set to 700-1000 nm.

9. A proximity detection device comprising:
a light emitting diode, LED (LD1);
a photodiode (PH1);
a feeding circuit for feeding the LED, comprising an RC circuit (R1-C1) connected to a voltage source and a first resistor (R2) connected to a ground terminal; and
a processing circuit (PRC), the proximity detection device being configured to implement the method of one of claims 1 to 8.

10. The device of claim 9, wherein the RC circuit (R1-C1) comprises a second resistor (R1) connected to the voltage source and a capacitor (C1) connected to the ground terminal, the second resistor having a resistance value between 5 and 15 Ω, the capacitor having a value between 0.4 mF and 1 mF, and the first resistor (R2) having a resistance value between 0.1 and 0.4 Ω, the voltage source being set to a voltage between 2.5 to 5.5 V.

11. The device according to claim 9 or 10, wherein a wavelength bandwidth of the light emitted by the LED (LD1) and to which the photodiode (PH1) is sensitive is set to 700-1000 nm.

12. A terminal comprising a proximity detection device according to one of claims 9 to 11.

13. The terminal of claim 12, of the type payment terminal.
